# EUROPÄISCHE PATENTSCHRIFT

(11) **EP 3 589 997 B1**
(45) Veröffentlichungstag und Bekanntmachung des Hinweises auf die Patenterteilung: **23.08.2023**
(21) Anmeldenummer: 18709951.0
(22) Anmeldetag: 22.02.2018
(51) Int. Cl.: G02B 21/00, G01J 3/44, G01N 21/64, G01N 21/65

(54) **VERFAHREN UND VORRICHTUNG ZUR ABBILDUNG EINER PROBENOBERFLÄCHE**
METHOD AND APPARATUS FOR IMAGING A SPECIMEN SURFACE
PROCÉDÉ ET DISPOSITIF POUR REPRÉSENTER UNE SURFACE D'ÉCHANTILLON

(30) Priorität: 03.03.2017 DE 102017203492; 03.03.2017 US 201762466691 P
(43) Veröffentlichungstag der Anmeldung: 08.01.2020
(73) Patentinhaber: WItec Wissenschaftliche Instrumente und Technologie GmbH, 89081 Ulm (DE)
(72) Erfinder: SPIZIG, Peter, 89168 Niederstotzingen (DE); HOLLRICHER, Olaf, 89233 Neu-Ulm (DE); IBACH, Wolfram, 89081 Ulm-Lehr (DE)
(74) Vertreter: Sawodny, Michael-Wolfgang
(86) Internationale Anmeldenummer: PCT/EP2018/054401
(87) Internationale Veröffentlichungsnummer: WO 2018/158136

(56) Entgegenhaltungen:
- WO-A1-2010/135323
- WO-A1-2011/131311
- DE-A1-102007 038 579
- US-A1- 2008 297 911
- US-B1- 7 002 737
- US-B1- 7 978 346

## Beschreibung

Die Erfindung betrifft ein Verfahren und eine Vorrichtung zur Abbildung einer Fläche, insbesondere Oberfläche einer Probe mit einer Topographie durch Rastern einer Vielzahl von Bereichen der Oberfläche mit Hilfe konfokaler Mikroskopie. Bei der konfokalen Mikroskopie erfolgt eine konfokale Abbildung des Bereiches der Oberfläche durch einen sich in einer Bildebene befindlichen Detektor. Insbesondere betrifft die Erfindung sogenannte konfokale Raman- und/oder Fluoreszenz-Mikroskope bzw. Vorrichtungen für die konfokale Fluoreszenz- und/oder Raman-Mikroskopie, ohne hierauf jedoch beschränkt zu sein.

Neben dem Verfahren zur Abbildung einer Fläche, insbesondere der Oberfläche, einer Probe mit Topographie, wird auch eine Vorrichtung zur Abbildung der Probe mit Hilfe von konfokaler Mikroskopie oder konfokaler Raman- und/oder Fluoreszenz-Mikroskopie beschrieben. Mit Hilfe von Raman-Messungen beziehungsweise Fluoreszenz-Messungen ist es möglich, eine Probe mit einer Lichtquelle anzuregen und aufgrund des von der Probe emittierten Lichts chemisch unterschiedliche Materialien der Probe abzubilden.

Bei der konfokalen Mikroskopie wird das Licht einer Lichtquelle auf dem Weg zur Probe durch ein Objektiv geleitet und so auf einen im Wesentlichen punktförmigen Bereich (Airy-Scheibchen) der Probenoberfläche fokussiert. Gleichzeitig kann das Objektiv dazu dienen, das von der Probe emittierte Licht, insbesondere das emittierte Raman- beziehungsweise Fluoreszenz-Licht aufzunehmen und an einen Detektor zu leiten. Mit Hilfe des Objektivs ist es also möglich, einen Bereich bzw. einen im Wesentlichen punktförmigen Bereich der Probe konfokal im Wesentlichen senkrecht zur Richtung des Beleuchtungs- und/oder Detektions-Strahlengangs abzubilden. Wird die Probe bzw. das Objektiv bzw. die Beleuchtung verfahren, so ist es möglich, einen Scan in x-y-Richtung durchzuführen und so die ganze Probe abzurastern.

Bei einer konfokalen Abbildung wird eine Lichtquelle, bevorzugt eine im Wesentlichen punktförmige Lichtquelle, vorzugsweise eine Laserlichtquelle, auf einen sich aus der Wellennatur des Lichtes ergebenden Fokus (Abbe Bedingung) bzw. einen im Wesentlichen punktförmigen Bereich, im Idealfall auf einen Punkt der Probe abgebildet. Anschließend wird dieser Bildpunkt vorzugsweise mit derselben Optik, das heißt mit dem gleichen Objektiv auf eine Lochblende, ein sogenanntes Pinhole, vor einem Detektor fokussiert. Anstelle der Anordnung eines separaten Pinholes vor dem Detektor ist es auch möglich, dass der Detektor selbst das Pinhole darstellt. Wird die konfokale Abbildung für die Mikroskopie eingesetzt, so erreicht man eine erhebliche Steigerung des Bildkontrastes, da zur Abbildung nur Licht aus der Fokusebene des Objektivs beiträgt.

Betreffend die konfokale Lichtmikroskopie wird auf die DE 199 02 234 A1 verwiesen, in der ein Mikroskop mit einem konfokalen Objektiv eingehend beschrieben ist.

Die konfokale Messung hat bei vielen Anwendungen, z. B. bei Raman- und/oder Fluoreszenzmessungen Vorteile, da ein vorhandener Streulichtuntergrund sehr stark unterdrückt wird. Da nur Licht aus der Fokusebene gemessen wird, macht es die konfokale Mikroskopie zudem möglich, dass im Falle transparenter Proben, auch Probenbereiche unterhalb der eigentlichen Probenoberfläche gemessen werden können.

Ein konfokales Raman- und/oder Fluoreszenz-Mikroskop ist aus der nachveröffentlichten DE 10 2009 015 945 A1 bekannt geworden.

Problematisch bei konfokalen Messungen bzw. konfokaler Mikroskopie ist jedoch, dass durch Drift, Topographie, Probenunebenheit, Rauigkeit, aber auch Verkippung der Probe oftmals die abzubildende Ebene bzw. Fläche, insbesondere die Oberfläche, beim Abrastern der Probe nicht in der Fokusebene bleibt.

Für befriedigende Resultate sind bei vielen Anwendungen daher erweiterte Verfahren und Vorrichtungen zur Fokusstabilisierung bzw. Fokusnachführung mit der zu messenden Fläche nötig.

Aus der US 5,581,082 B1 ist ein AFM-Mikroskop oder STM-Mikroskop bekannt geworden, das mit einem konfokalen Mikroskop kombiniert wird. Mit Hilfe der AFM- oder STM-Spitze kann die Probe insbesondere auch in z-Richtung abgetastet werden.

Bei der US 5,581,082 B1 wird mit Hilfe der AFM-Spitze Tiefeninformation gewonnen. Während der AFM-Messung, insbesondere der AFM-Topographiemessung, werden auch optische Signale aufgenommen, so dass die aus der AFM-Topographiemessung gewonnenen Topographiedaten mit den optischen Daten korreliert werden können. Bei der US 5,581,082 wird die konfokale Messung immer gleichzeitig zur Topographiemessung durchgeführt. Nachteilig an der US 5,581,082 ist der eingeschränkte Scanbereich, der im Bereich von 100 µm bis maximal 300 µm in der x-y-Ebene liegt. Des Weiteren kann mit der AFM-Spitze in z-Richtung nur Tiefeninformation maximal im Bereich 5-10 µm zur Verfügung gestellt werden. Die US 5,581,082 B1 erlaubt somit keine Messungen von Probenbereichen > 300 µm und von Rauigkeiten > 10 µm.

Bei der konfokalen Mikroskopie, insbesondere bei der konfokalen Raman-Mikroskopie und/oder Fluoreszenz-Mikroskopie an Oberflächen, insbesondere an größeren Probenbereichen, insbesondere > 300 µm und an technischen Oberflächen, ergibt sich dadurch das Problem, dass eine Abbildung nur sehr schwer möglich ist, da oftmals eine nicht hinreichend flache Probentopographie gegeben ist. Bei einem Scan in einer vorgegebenen Ebene, einem sogenannten X-Y-Scan, verlässt dann die Probenoberfläche immer wieder die Fokusebene des Mikroskops, so dass eine einfache und vollständige Abbildung der Probenoberfläche bzw. der Probe nicht möglich ist.

In der WO 2011/131311 A1 wird ein Verfahren und eine Vorrichtung beschrieben, die es ermöglicht, zunächst eine Oberflächentopographie einer Probe für konfokale Mikroskopie zu bestimmen und dann mit Hilfe der Oberflächentopographiewerte die abzubildende Fläche in eine konfokale Ebene zu verbringen. Hierzu schlägt die WO 2011/131311 A1 eine Vorrichtung mit einem Oberflächentopographiesensor vor. Der Oberflächentopographiesensor kann ein konfokaler Sensor mit einem optischen System, bevorzugt mit reflektiven und/oder diffraktiven Komponenten sein. Alternativ sind in der WO 2011/131311 A1 taktile Sensoren wie Profilometer, AFM, ein Weißlichtinterferometer, ein Triangulationssensor oder ein Laser Scanning System angegeben. Nachteilig am System der WO 2011/131311 A1 ist, dass zunächst die Oberflächentopographie der gesamten Probe ermittelt wird und erst anschließend die eigentliche Fluoreszenz- oder Raman-Messung unter Berücksichtigung der ermittelten Oberflächen-Topographie anschließt. Dies führt dazu, dass ein relativ großer zeitlicher Abstand zwischen Topographie- und Fluoreszenz- oder Raman-Messung besteht. Ein Geräte- bzw. Proben-Drift oder zeitlich veränderliche Proben (z.B. durch Verdunsten oder Trocknen der Probe) können bei diesem Verfahren zu großen Schwierigkeiten führen.

Alternativ zu der oben beschriebenen, sequentiellen Messung, d.h. der Raman- oder Fluoreszenzmessung nach der Topographiebestimmung, beschreibt die WO 2011/131 311 A1 auch ein Single Pass Verfahren. Dabei wird mit Hilfe eines Oberflächentopographiesensors, insbesondere eines chromatischen Sensors, an jedem Rasterpunkt zunächst eine Abstandsmessung vorgenommen, hieraus ein Abstandssignal, das charakteristisch für die Oberflächentopographie ist, ermittelt und dieses Abstandssignal dann direkt für diesen einen Rasterpunkt verwendet, um die Fokusebene bzw. konfokale Ebene des konfokalen Mikroskops, insbesondere konfokalen Raman-Mikroskops, nachzuführen, bevor zum nächsten Rasterpunkt verfahren wird, an dem sich der Zyklus wiederholt. Dies bedeutet, dass an jedem Rasterpunkt zunächst die Topographie gemessen und erst nach Abschluss dieser Messung und nach Vollendung der Nachführung mit der Topographie die konfokale Messung, insbesondere die konfokale Raman- oder Fluoreszenzmessung gestartet wird. Für große Zeitbereiche des Zyklus, insbesondere während der gesamten Topographiemessung und des Verfahrens der Probe von einem Rasterpunkt zum nächsten, wird somit kein konfokales Raman- oder Fluoreszenzsignal detektiert.

Zusammenfassend ist auch dieses in WO 2011/131 311A1 beschriebene Single Pass Verfahren durch das aufwendigen Hin- und Her-Wechseln der verschiedenen Messmodi und Messzyklen gekennzeichnet. Damit verbunden ist ein großer Zeitbereich währenddessen keine konfokalen Signale, insbesondere Raman- oder Fluoreszenzsignale erfasst werden können. Zudem ist das Verfahren sehr langsam und aufwendig.

Nachteilig an den in WO 2011/131 311A1 aufgeführten Verfahren ist weiterhin, dass beispielsweise der verwendete konfokale chromatische Sensor, bedingt durch sein Messprinzip, eine möglichst breitbandige und gleichzeitig sehr intensive Weisslichtquelle benötigt, um hinreichende Topographieauflösung bei gleichzeitig kurzen Messzeiten zu erzielen. Intensive breitbandige Lichtquellen sind jedoch im Gegensatz zu den typischerweise für die Raman- oder Fluoreszenzmessungen verwendeten monochromatischen Lichtquellen wie z.B. Laser, in der Regel keine Punktlichtquellen, sondern haben eine deutlich makroskopische Ausdehnung. Nur Licht aus einer Punktlichtquelle lässt sich aber auf einen minimal kleinen beugungsbegrenzten Fokus abbilden. Dadurch wird die erzielbare laterale Auflösung der Topographiemessung mit einem konfokalen chromatischen Sensor im Gegensatz zur beugungsbegrenzten Raman- oder Fluoreszenzmessung in der Praxis auf etwa 10 µm begrenzt. Dieser deutliche Unterschied in der lateralen Auflösung der Topographiemessung zur lateralen Auflösung der beugungsbegrenzten Raman- und/oder Fluoreszenzmessung um etwa eine Größenordnung, führt insbesondere bei hochaufgelösten Messungen an feinen Strukturen oder rauen, porösen Oberflächen dazu, das die Fokusebene für die Raman- oder Fluoreszenzmessung nicht korrekt mit lateral kleinen Probentopographien nachgeführt werden kann.

Weiterhin nachteilig, insbesondere wenn die Raman- bzw. Fluoreszenzmessung als auch die Topographiemessung durch die gleiche Linse erfolgen soll, wie in WO 2011/131 311A1 vorgeschlagen, erweist sich, dass sowohl die Raman- und Fluoreszenzmessung, als auch die konfokal chromatische Topographiemessung möglichst breite spektrale Frequenzbereiche, idealerweise jeweils praktisch den ganzen sichtbaren Spektralbereich, beanspruchen. Ein Vermeiden der spektralen Überlappung ist somit nur schwer möglich. Sollen die Wellenlängenbereiche für die Topographiemessung und die Raman- und Fluoreszenzmessung dennoch in zwei nichtüberlappende Spektralbereiche separiert werden, wie in WO 2011/131 311 A1 dargelegt, so stellt dies extrem hohe Anforderungen an die Vergütung der gemeinsamen Optiken, sollten die Linsen doch für den gesamten sich damit ergebenden summierten Spektralbereich optimiert sein.

In WO 2011/131 311 A1 wird daher auch ein weiteres, einfacheres Single Pass Verfahren vorgestellt, dass als Extended Fokus Verfahren bezeichnet wird. Hierbei wird neben der ersten Anregungslichtquelle keine weitere Lichtquelle für die Oberflächendetektion benötigt. Stattdessen wird die Probe in z-Richtung moduliert und die Signalcharakteristik des reflektieren Raleigh-Lichts erfasst. Befindet sich die Probe im Fokus, wird maximales Raleigh-Licht detektiert. Die Signalcharakteristik des Raleigh-Lichts während der Modulation wird dann dazu verwendet, die mittlere z-Position der Probe, um die die Modulation stattfindet, mit der Probentopgraphie nachzuführen. Zumindest die mittlere z-Position bleibt so immer im Fokus. Die Raman- bzw. Fluoreszenzmessung wird während der gesamten Modulationsperiode durchgeführt.

Dies bedeutet, dass sich die Probe relativ lange Zeit außerhalb des eigentlichen Fokus für das Raman- oder Fluoreszenzsignal befinden kann, so dass lange Zeit kein oder nur unerwünschtes Raman- oder Fluoreszenzsignal detektiert wird, was dazu führt, dass das Raman- oder Fluoreszenzsignal schwach und verwaschen ist. Gleichzeitig wird durch die Modulation die Konfokalität der Messung zerstört, da auch Bereiche ober- und unterhalb der eigentlich interessierenden Probenoberfläche zum gemessenen Raman- oder Fluoreszenzsignal beitragen.

Die bewährten Vorteile der konfokalen Lichtmikroskopie, wie höhere Ortsauflösung und hohe Tiefenschärfe, gehen somit bei diesem Verfahren verloren.

Aus der WO 2010/135323 A1 ist eine Vorrichtung und ein Verfahren zur Bestimmung der räumlichen Orientierung mittels eines Auto-Focus Systems bekannt geworden.

Die US 7,002,737 B1 beschreibt ein konfokales Mikroskop, das eine Linse mit variablem Fokus umfasst.

Aus der US 2008/297911 A1 ist eine Linse bekannt geworden, mit der eine Fokuslänge an unterschiedliche Probentopographien angepasst werden kann.

Die US 7,978,346 B1 zeigt ein Verfahren und eine Vorrichtung, um ein dreidimensionales, hochaufgelöstes Bild aus beugungsbegrenzten optischen Signalen zu erhalten.

Aus der DE 10 2007 038 579 A1 ist ein Laser-Scanning-Mikroskop mit einem Scanner und einem Mikroskopobjektiv bekannt geworden. Bei dem Laser-Scanning-Mikropskop wird mit Standartobjektiven eine scharfe Abbildung einer Probe ohne Relativbewegung von Mikroskopobjektiv und Probe erreicht.

Aufgabe der Erfindung ist es , ein Verfahren und eine Vorrichtung anzugeben, mit der die Nachteile des Standes der Technik, insbesondere die in der WO 2011/131 311 A1 niedergelegten, vermieden werden können. Insbesondere soll ein Verfahren und eine Vorrichtung zur Verfügung gestellt werden, das bzw. die eine einfache und schnelle Raman- und/oder Fluoreszenzmessung auch auf unebenen Probeflächen ermöglicht. Des Weiteren soll es die Erfindung ermöglichen, eine Ebene bzw. eine Fläche, insbesondere eine Oberfläche einer Probe konfokal abzubilden, d.h. mit Hilfe konfokaler Mikroskopie. Dies setzt voraus, dass die Probe auch mit nicht hinreichend flacher Probentopographie, beispielsweise einer gekrümmten Probe immer während der gesamten Messung im Fokus gehalten wird.

Erfindungsgemäß wird diese Aufgabe durch ein Verfahren gemäß Anspruch 1 und eine Vorrichtung gemäß Anspruch 8 gelöst. Des Weiteren werden Verwendungen gemäß Anspruch 13 angegeben. Beim erfindungsgemäßen Verfahren zur Abbildung einer Ebene bzw. Fläche, insbesondere einer Oberfläche mit einer Topographie mit Hilfe konfokaler Mikroskopie, insbesondere konfokaler Raman- und/oder Fluoreszenzmikroskopie, umfasst die Vorrichtung zur Durchführung des Verfahrens eine erste Lichtquelle zur Erzeugung von Anregungsstrahlung für die Raman- und/oder Fluoreszenzmikroskopie und eine zweite zeitgleich aktive Lichtquelle zur Erzeugung von Strahlung in einem schmalen Wellenlängenbereich, der nicht mit dem Wellenlängenbereich der ersten Lichtquelle oder des zu detektierenden Wellenlängenbereichs, wie beispielsweise des Raman-/Fluoreszenzlichts zusammenfällt, emittiert. Zeitgleich bedeutet in vorliegender Anmeldung, dass erste und zweite Lichtquelle gleichzeitig, d.h. gemeinsam Licht auf die Probe emittieren und die Topographiemessung der Probe zur Fokusnachführung einerseits und die Raman- bzw. Fluoreszenzmessung andererseits dadurch simultan arbeiten können. Desweiteren wird die Fokusebene der zweiten Lichtquelle mittels einer separat steuerbaren Fokuslage in/auf die Oberfläche der Probe gebracht und aus dem Steuersignal der steuerbaren Fokuslage die so ermittelte Topographie der Probe zur Steuerung/Regelung der Fokusebene der ersten Lichtquelle verwendet. Bei dem erfindungsgemäßen Verfahren bleibt die Raman- und/oder Fluoreszenzmessung immer aktiv und im Fokus und wird durch die zeitgleich durchgeführte Topographiemessung der Probe zur Fokusnachführung nicht beeinflusst. Das Verfahren ist also dadurch charakterisiert, dass Raman- und/oder Fluoreszenzmessung und Topographiemessung gleichzeitig durchgeführt werden. Sowohl die erste Lichtquelle wie die zweite Lichtquelle kann eine Laserlichtquelle ohne Beschränkung hierauf sein. Auch Super-Lumineszenz-Dioden (SLED) als Lichtquelle wären möglich. SLEDs basieren wie Laserdioden auf einem p-n-Übergang und werden in Durchgangsrichtung betrieben. Die emittierte mittlere Wellenlänge basiert auf den Bandabstand und kann durch Auswahl unterschiedlicher Halbleiterwerkstoffe wie Indiumarsenid (InAs), Indiumgalliumarsenid (InGaAs) oder Indiumphosphid (InP) beeinflusst werden. Im Gegensatz zu Laserdioden besitzen SLEDs keinen Resonator, welcher eine optische Rückkopplung mittels Spiegel darstellt.

Bei dem erfindungsgemäßen Verfahren wird mit zwei lateral in etwa gleich großen Foki gearbeitet, d.h. die Fokusgröße von erstem und zweitem Fokus sind in etwa gleich und können so den identischen Probenbereich auswerten.. Der erste Fokus ist der Fokus der ersten Lichtquelle, also der Laserlichtquelle zur Raman- bzw. Fluoreszenzanregung. Der zweite Fokus ist der Fokus der zweiten Lichtquelle und dient der Topographieermittlung. Die Fokusebene der zweiten Lichtquelle wird mittels einer separat steuerbaren Fokuslage auf die Oberfläche der Probe gebracht. Die separat steuerbare Fokuslage kann, beispielsweise durch eine elektrisch fokussierbare Linse eingestellt werden. Besonders bevorzugt ist eine periodische Anregung der Linse durch die deren Fokuslage in z-Richtung periodisch geändert wird. Immer wenn der Fokus der zweiten Lichtquelle in der Ebene der Oberfläche der Probe zu liegen kommt, wird ein Signal detektiert. Dies ist darauf zurückzuführen, dass aufgrund des konfokalen Prinzips immer nur dann, wenn der Fokus der zweiten Lichtquelle auf der Oberfläche zu liegen kommt, Licht in ausreichender Intensität zurück auf den Detektor reflektiert wird, so dass ein Signal detektiert werden kann. Die aus dem Steuersignal der steuerbaren Fokuslage ermittelte Topographie der Probe wird dazu genutzt, die Probe in die Fokusebene der konfokalen Raman- und/oder Fluoreszenzmikroskopie zu verbringen. Mit der Erfindung ist es somit möglich durch die ständige Auswertung der Fokusebene der zweiten Lichtquelle die Probe permanent in der konfokalen Ebene der Raman- und/oder Fluoreszenzmessung zu halten. Gleichzeitig wird die Raman- und/oder Fluoreszenzmessung durch die Ermittlung und Ausregelung der Topographie nicht gestört und kann permanent aktiv bleiben. Hierdurch wird das Raman- und/oder Fluoreszenzsignal gegenüber demjenigen, wie es mit einer Regelung gemäß der WO 2011/131 311A1 erreicht wird, die ja lediglich eine Nachführung darstellt, erheblich verstärkt. Mit dem erfindungsgemäßen Verfahren ist es somit möglich, einen technischen und/oder mechanischen Drift zu kompensieren, so dass gegenüber dem aus der WO 2011/131 311 A1 bekannten Verfahren längere Messzeiten möglich sind, da thermischer und/oder mechanischer Drift ausgeregelt wird. Hochaufgelöste Messungen oder Messungen an porösen oder rauen Proben werden durch die erreichte vergleichbare laterale Auflösung von Topographie- und Raman- und/oder Fluoreszenzmessung ebenfalls stark verbessert.

Auch die Raman- und/oder Fluoreszenzmessungen von während der Messung trocknenden Proben oder Flüssigkeiten, die beispielsweise verdampfen, ist möglich, da die erfindungsgemäße Regelung eine kontinuierliche Verfolgung der Oberfläche zur Verfügung stellt.

Gemäß der Erfindung wird die angegebene Regelung/Steuerung dazu verwendet, die Probe in der Fokusebene für die Raman- und/oder Fluoreszenzmessung zu halten.

Die Abbildung der Ebene bzw. Fläche, insbesondere Oberfläche der Probe, mit konfokaler Mikroskopie, insbesondere Raman- und/oder Fluoreszenzmikroskopie, wird durch Rastern einer Vielzahl von Bereichen der Ebene bzw. Fläche, insbesondere Oberfläche, mit einer Einrichtung zur konfokalen Abbildung des Bereiches der Ebene bzw. Fläche, insbesondere Oberfläche, erreicht.

Was in vorliegender Anmeldung unter der Topographie einer Oberfläche bzw. unter einer Probentopographie verstanden wird, soll beispielhaft aber nicht abschließend für ein konfokales Raman Mikroskop beschrieben werden. Unter Probentopographie werden bei einer derartigen Anordnung Probenunebenheiten größer 1nm, insbesondere größer 10nm, bevorzugt größer als 100nm verstanden. Die Probenunebenheiten sind Abweichungen der Probenoberfläche in z-Richtung, die auch als Rauheiten bezeichnet werden.

Die abzurasternde Ebene ist die x/y-Ebene. Die Auflösung in der x/y-Ebene beträgt bei einem Raman-Mikroskop oder Fluoreszenz Mikroskop wenigstens 0,1 µm, bevorzugt wenigstens 1 µm, bevorzugt 1 µm bis 50 µm.

Gemäß der Erfindung wird ständig die Lage der Fokusebene der zweiten Lichtquelle ermittelt. Hierzu wird die Fokuslage der zweiten Lichtquelle beispielsweise mit Hilfe einer elektrisch fokussierbaren Linse variiert, wobei die Linse bevorzugt periodisch, beispielsweise mit einer Frequenz von 200 Hz bis 800 Hz angeregt wird. Neben der Linse, deren Fokus elektrisch geändert wird, ist es auch möglich die Linse periodisch mechanisch zu bewegen. Ein alternativer Frequenzbereich, die dem angegebenen von 200 Hz bis 800 Hz, ist ein Frequenzbereich von 50 kHz bis 1 MHz. Beim Ermitteln der Lage der Fokusebene durch Variation der Fokuslage der zweiten Lichtquelle ist es erforderlich, die Modulationstiefe des Fokus bzw. der Fokuslage der Rauhigkeit beziehungsweise Topographie der Probe anzupassen.

Die Probe wird aufgrund der mit Hilfe der zweiten Lichtquelle und beispielsweise der elektrisch fokussierbaren Linse ermittelten Fokusebene der zweiten Lichtquelle in die konfokale Ebene der konfokalen Raman- oder Fluoreszenzmikroskopie verbracht. Das Verbringen in die konfokale Ebene der Raman-/Fluoreszenzmikroskopie erfolgt somit gleichzeitig bzw. zeitgleich zur Messung der Fokuslage der zweiten Lichtquelle.

Mit Hilfe der zweiten Lichtquelle, insbesondere der zweiten Laserlichtquelle und dem Durchfahren des Fokus der zweiten Lichtquelle mit Hilfe der elektrisch fokussierbaren Linse ist es möglich, beispielsweise das Raman-Mikroskop ständig in der Fokusebene bzw. konfokale Ebene für die Raman-Mikroskopie zu halten und somit die konfokale Raman-Mikroskopie auch bei ausgeprägter, d.h. nicht ebener Probentopographie zu betreiben.

In einer besonders bevorzugten Ausgestaltung der Erfindung ist vorgesehen, dass die Nachregelung der Fokusebene der ersten Lichtquelle für die Raman- und/oder Fluoreszenzmikroskopie beispielsweise durch Änderung des Abstandes zwischen Mikroskop-Objektiv und Probe erfolgt. Dies kann durch Verfahren des Probentisches und/oder des Mikroskopobjektives erfolgen.

Eine weiter bevorzugte Ausgestaltung der Erfindung ist, dass das Licht der ersten und zweiten Lichtquelle durch das gleiche Mikroskopobjektiv geführt wird.

Ein besonders einfacher optischer Aufbau kann realisiert werden, wenn die Steuerung der Fokuslage der zweiten Lichtquelle im Wesentlichen so erfolgt, dass sich der Fokus der zweiten Lichtquelle längs der optischen Achse des Mikroskops verschiebt.

Eine einfache Ermittlung der Topographie der Probe ist möglich, wenn die Fokuslage der zweiten Lichtquelle periodisch variiert wird und die Topographie der Probe durch den zeitlichen Verlauf der Maxima der Intensität des reflektierten bzw. an der Oberfläche der Probe gestreuten Lichts der zweiten Lichtquelle bestimmt wird.

Vorteilhaft ist es, wenn die Fokuslage der zweiten Lichtquelle mittels einer fokussierbaren Linse im Strahlengang gesteuert wird, die nur den Strahlengang der zweiten Lichtquelle beeinflusst. Eine elektrisch fokussierbare Linse, bei der die Brennweite durch Anlagen einer elektrischen Spannung bzw. durch einen elektrischen Strom gesteuert wird, ist eine besonders einfache Ausführungsform, mit der die Fokuslage verändert werden kann.

Alternativ hierzu ist es möglich die Fokuslage der zweiten Lichtquelle mittels verschiebbarer Linse oder mehreren Linsen zu steuern.

Besonders bevorzugt ist es, wenn die laterale Fokusgröße der zweiten Lichtquelle mit der lateralen Fokusgröße der ersten Lichtquelle im Wesentlichen übereinstimmt. Dies hat den Vorteil, dass die Topographieermittlung einerseits und die Raman- bzw. Fluoreszenzmessung andererseits, möglichst denselben Probenbereich und dasselbe Probenvolumen auswerten. Würde die laterale Fokusgröße der beiden Lichtquellen dagegen stark voneinander abweichen, insbesondere wenn die Fokusgröße der ersten Lichtquelle deutlich größer als die Fokusgröße der zweiten Lichtquelle wäre, so würden alle Topographiedetails kleiner als die Fokusgröße der ersten Lichtquelle, wie beispielsweise Poren oder Partikel auf der Probe, durch ihre geringe Größe der Topographieermittlung entgehen und die Raman- bzw. Fluoreszenzmessung an diesen Probenstellen somit nicht im Fokus gehalten. Durch die im Wesentlichen übereinstimmenden lateralen Fokusgrößen von erster und zweiter Lichtquelle wird ein idealer Topographieausgleich erzielt, da genau dieselben Topographie-Details ausgeregelt bzw. ausgesteuert werden, die auch von der Raman- bzw. Fluoreszenzmessung aufgelöst werden.

Die durch die Steuerung/Regelung festgestellte notwendige Änderung des Abstandes zwischen Mikrokopobjektiv und Probe kann durch Verfahren der Probe in Richtung der optischen Achse des Mikroskops erfolgen. Alternativ ist ein Verfahren des Mikroskops in Richtung der optischen Achse des Mikroskopes möglich oder ein Verfahren des Mikroskopobjektives in Richtung der optischen Achse des Mikroskops.

Besonders bevorzugt ist es, wenn sich der Wellenlängenbereich der zweiten Lichtquelle nicht mit dem zu detektierenden Wellenlängenbereich des Ramanstreulichts und/oder des Fluoreszenzlichtes überschneidet.

Neben dem Verfahren stellt die Erfindung auch eine Vorrichtung zur Abbildung der Oberfläche einer Probe durch Rastern einer Vielzahl von Bereichen der Oberfläche in der x/y-Ebene, umfassend eine Einrichtung zur konfokalen Abbildung des Bereiches der Oberfläche in eine Fokusebene auf einen Detektor zur Verfügung, wobei die Vorrichtung eine erste und eine zweite Lichtquelle aufweist.

Das Licht der konfokalen Raman- und/oder Fluoreszenzmikroskope, d.h. das Licht der ersten Lichtquelle kommt gemäß der Erfindung in einem ersten Wellenlängenbereich zu liegen und das Licht der zweiten Lichtquelle in einem zweiten Wellenlängenbereich, wobei sich erster und zweiter Wellenlängenbereich nicht überschneiden. Der erste Wellenlängenbereich wird in der Regel so gewählt, dass der erste Wellenlängenbereich durch die Grenzen des emittierten Lumineszenzspektrums und/oder Ramanspektrums der zu untersuchenden Probe definiert wird und der zweite Wellenlänge oberhalb oder unterhalb des ersten Wellenlängenbereiches ohne Überschneidung mit dem ersten Wellenlängenbereich liegt. Beispielsweise kann der erste Wellenlängenbereich für das emittierte Lumineszenz- oder Ramanspektrum der zu untersuchenden Probe im Bereich von 350 nm bis 1000 nm, bevorzugt 500 nm bis 1000 nm, insbesondere 532 nm bis 650 nm reichen. Der zweite Wellenlängenbereich reicht von 1000 nm bis 2000 nm, bevorzugt von 1000 nm bis 1500 nm.

Wie zuvor beschrieben, wird bei der konfokalen Mikroskopie das Licht der monochromatischen ersten Lichtquelle für die Raman- und/oder Fluoreszenzmessung auf dem Weg zur Probe durch ein Objektiv geleitet und so im Wesentlichen auf einem Punkt der Probenoberfläche fokussiert. Im Fall, dass die Vorrichtung insbesondere ein konfokales Raman-Mikroskop ist, kann vorgesehen sein, dass ein Spektrometer das Licht, das von der Probe emittiert wird, d.h. das Raman- beziehungsweise Fluoreszenz-Licht spektral zerlegt. Eine solche spektrale Zerlegung kann in dem Spektrometer zum Beispiel mit einem Gitter oder einem Prisma erfolgen. Wird das so zerlegte Licht mit einer CCD-Kamera aufgenommen, so ist es möglich, ein komplettes Spektrum des von der Probe gestreuten Raman- bzw. Fluoreszenz-Lichtes aufzunehmen. Der Vorteil der spektralen Zerlegung des Raman-Lichtes bei einem Raman-Mikroskop liegt daran, dass zum Beispiel durch Drehen des Gitters im Spektrometer ein beliebiger Spektralbereich für den Detektor zur Messung selektiert werden kann.

Die Vorrichtung, insbesondere das konfokale Mikroskop, bevorzugt das konfokale Raman- und/oder konfokale Fluoreszenz-Mikroskop, kann einen in x/y Richtung verfahrbaren Probentisch aufweisen, der es ermöglicht, durch Abrastern/Verfahren der Probe beispielsweise die Probenoberfläche abzubilden. Alternativ oder zusätzlich kann auch das Objektiv oder das Mikroskop selbst verfahren werden, um ein Abbild der Probe zu erhalten. Auch ist es möglich, räumliche Karten von spektralen Eigenschaften der Probe aufzunehmen. Insbesondere mit einer konfokalen Abbildung wird eine sehr hohe Tiefenauflösung erreicht.

Mit Hilfe der zweiten Lichtquelle und insbesondere in Kombination mit der elektrischen fokussierbaren Linse kann erfindungsgemäß die Fokusebene der zweiten Lichtquelle mittels separat steuerbarer Fokuslage in/auf die Oberfläche der Probe gebracht werden. Aus dem Steuersignal der steuerbaren Fokuslage wird die Topographie der Probe zur Regelung der Fokusebene der ersten Lichtquelle für die Raman-Mikroskopie ermittelt. Diese Steuerung/Regelung erlaubt es die Probenoberfläche beim Abrastern ständig in der konfokalen Ebene für die konfokale Raman-Mikroskopie zu halten. Hierzu erweitert man den x-y-Scan der Probe auf einen x-y-z-Scan, wobei der z-Scan dazu dient, die Probentopographie auszugleichen. Hierzu kann der Probentisch und/oder das Objektiv zusätzlich zur x/y-Richtung in z-Richtung verfahren werden.

Im Gegensatz zur WO 2011/131 311 A1 ist es zur Steuerung/Regelung bei dem erfindungsgemäßen Verfahren nicht notwendig zunächst die Oberflächentopographie aufzunehmen, um dann nachgelagert die Probenebene in den Fokus nachzuführen, vielmehr erlaubt die ständige Bestimmung der Fokuslage mit Hilfe der zweiten Lichtquelle das zeitgleiche Verbringen der Probe in die Fokalebene des Objektives für die konfokale Raman- und/oder Fluoreszenzmikroskopie. Dies hat den Vorteil, dass ein wesentlich stärkeres Raman- und/oder Fluoreszenzsignal als bei einer bloßen Nachführung wie in der WO 2011/131311 A1 erhalten wird.

Die Erfindung soll nachfolgend anhand der Ausführungsbeispiele detailliert beschrieben werden:
Es zeigen:
- Fig. 1a: den prinzipiellen Aufbau eines Raman-Mikroskops mit einer ersten und einer zweiten Lichtquelle, wobei der Strahlengang von erster und zweiter Lichtquelle eingezeichnet ist;
- Fig. 1b: zeigt den prinzipiellen Aufbau eines Raman-Mikroskops mit erster und zweiter Lichtquelle, wobei der Anregungsfokus der ersten Lichtquelle für die Raman-Messung durch das gleiche Objektiv geführt wird, wie der Fokus der zweiten Lichtquelle;
- Fig. 2a-2b: Modulation der elektrisch fokussierbaren Linse und detektierte Signale für die zweite Lichtquelle;
- Fig. 2c: prinzipielle Darstellung der Foki der ersten und der zweiten Lichtquelle sowie eine unebene Probenoberfläche
- Fig. 3: Topographie einer zu untersuchenden Probe.
- Fig. 4: Abbildung der Probe gemäß Fig. 3 ohne Regelung, die die Probe in die konfokale Ebene der Raman- und/oder Fluoreszenzmikroskopie verbringt;
- Fig. 5: Abbildung der Probe gemäß Fig. 3 mit Regelung, die die Probe in die konfokale Ebene der Raman- und/oder Fluoreszenzmikroskopie verbringt;
- Fig. 6: Intensitätsverlauf des Raman-Signals mit und ohne Regelung sowie Oberflächentopographie der Probe.

Obwohl vorliegende Erfindung nachfolgend an den Ausführungsbeispielen einer Vorrichtung zur Abbildung einer Probenoberfläche, insbesondere mit gestreutem Ramanlicht, einem so genannten konfokalen Raman-Mikroskop beschrieben wird, ist die Erfindung hierauf nicht beschränkt. Vielmehr umfasst sie sämtliche konfokale Mikroskope, insbesondere auch konfokale Lichtmikroskope oder Fluoreszenzmikroskope. Auch für derartige konfokale Mikroskope kann eine zweite Lichtquelle mit einer elektrisch fokussierbaren Linse eingesetzt werden, um die Probe in die konfokale Ebene der Raman-Mikroskopie in Abhängigkeit von der Oberflächentopographie zu verbringen.

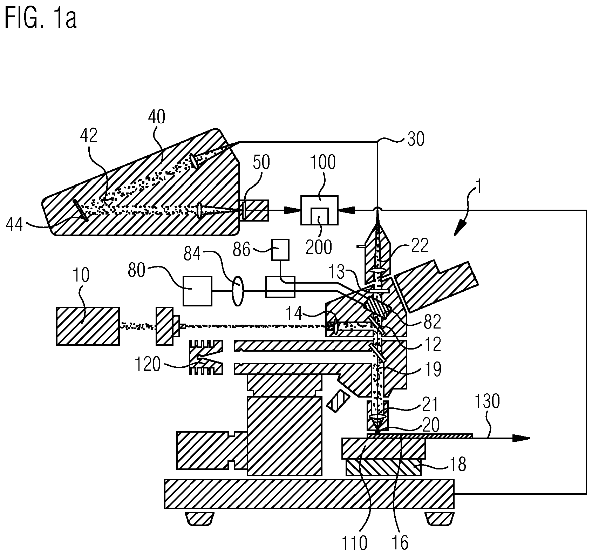

In Figur 1a ist der prinzipielle Aufbau einer ersten Ausführungsform eines konfokalen Raman-Mikroskops zur Aufnahme einer Probenoberfläche dargestellt. Mit Hilfe der konfokalen Raman-Mikroskopie können chemische Eigenschaften und Phasen von flüssigen und festen Komponenten analysiert werden bis in den Bereich des durch Beugung begrenzten Auflösungsvermögens von ungefähr 200 Nanometern. Eine Markierung der Probe beispielsweise mit Fluoreszenzstoffen wie in der Fluoreszenzmikroskopie ist nicht notwendig. Durch den konfokalen Aufbau wird eine Tiefenauflösung zur Verfügung gestellt, die es erlaubt, die Probe in die Tiefe zu analysieren, ohne beispielsweise Schnitte durchführen zu müssen.

Bei der konfokalen Mikroskopie wird eine punktförmige Lichtquelle, vorzugsweise ein Laser, auf einem Punkt der Probe abgebildet. Anschließend wird dieser Bildpunkt vorzugsweise mit derselben Optik auf eine Lochblende, ein so genanntes Pin-Hole, vor einem Detektor fokussiert. Die Größe der Lochblende muss dabei angepasst an die beugungsbegrenzte Abbildung des Beleuchtungsbildes sein. Das Bild wird nun dadurch erzeugt, dass der Meßpunkt über die Probe gerastert wird, die Probe also Punkt für Punkt abgetastet wird. Mit dieser Art der Abbildung erreicht man eine erhebliche Steigerung des Bildkontrastes, da zur Abbildung nur die Fokusebene des Objektivs beiträgt. Außerdem kann die Auflösung aufgrund der Faltung des Beugungspunktes mit der Apertur der Lochblende um etwa den Faktor √2 auf etwa λ/3 reduziert werden. Zusätzlich kann man ein dreidimensionales Bild der Probenstruktur mit einer axialen Auflösung von etwa einer Wellenlänge erhalten.

Betreffend die konfokale Mikroskopie wird beispielsweise auf die DE 199 02 234 A1 verwiesen.

In Figur 1a ist ein möglicher Aufbau eines konfokalen Raman-Mikroskops, beispielsweise des Mikroskops alpha300R der WITec GmbH, D - 89081 Ulm, Deutschland, dargestellt. Bei dem konfokalen Raman-Mikroskop 1 wird das Licht einer ersten Lichtquelle 10 an einem Strahlteilerspiegel 12 nach einer Strahlaufweitung 14 in Richtung der Probe 16 auf den Probentisch 18 gelenkt. Das Licht der ersten Lichtquelle, insbesondere des ersten Lasers ist bevorzugt Anregungslicht für Raman- oder Fluoreszenzstrahlung und liegt in einem Wellenlängenbereich von 350 nm bis 1000 nm, bevorzugt 500 nm bis 1000 nm. Der umgelenkte Lichtstrahl 19 des Anregungslichtes wird dabei durch eine geeignete Optik 21 auf einen im Wesentlichen punktförmigen Bereich 20 auf der Probe 16 fokussiert. Das Licht der ersten Lichtquelle, insbesondere der Laserlichtquelle 10 wechselwirkt mit der Materie der Probe 16. Es entsteht zum einen von der Probe zurückgestreutes Rayleigh-Licht derselben Wellenlänge wie das eingestrahlte Licht. Dieses Licht wird über einen Strahlenteiler 12 umgelenkt auf einen Kantenfilter bzw. Notchfilter 13 und gelangt nicht in die Detektionsoptik.

Das Licht mit unterschiedlicher(n) Frequenz(en), als das von der Probe emittierte Rayleigh-Licht, nämlich das Raman-Licht, durchtritt den Strahlenteiler 12. Hinter dem Strahlenteiler 12 ist das Raman-Licht mit Bezugsziffer 22 gekennzeichnet. Über ein nicht dargestelltes Pin-Hole wird das Raman-Licht 22 in eine Lichtleitfaser 30 eingekoppelt und gelangt zu einem Spektrometer 40. Im Spektrometer 40 wird der Strahl mit Raman-Licht durch eine geeignete Optik wieder aufgeweitet, ergebend den Strahl 42, der auf einen Gitterspektralfilter 44 trifft. Der Gitterspektralfilter 44 beugt das Licht entsprechend seiner Wellenlänge in unterschiedliche Richtungen, so dass auf dem CCD-Chip 50 ortsabhängig ein spektrales Signal aufgenommen werden kann. Der CCD-Chip 50 weist beispielsweise 1024 Kanäle auf, so dass insgesamt 1024 Kanäle des CCD-Chips Licht unterschiedlicher Wellenlänge aufnehmen können.

Das Bild der Probe entsteht durch Abrastern in der x-/y-Ebene in Pfeilrichtung 130.

Zur Justage bzw. zur Beobachtung kann auch Licht einer Weißlichtquelle 120 auf die Probe 16 eingekoppelt werden.

Das konfokale Raman-Mikroskop 1 umfasst des Weiteren eine zweite Lichtquelle 80. Die zweite Lichtquelle 80 ist zusätzlich zur ersten Lichtquelle des konfokalen Raman-Mikroskops 1 ausgeführt. Die zweite Lichtquelle umfasst in der dargestellten Ausführungsform gemäß Figur 1a einen eigenen unabhängigen Strahlengang, der über Spiegel 82 in die Optik 21 des Objektives eingekoppelt wird. Der Strahlengang der zweiten Lichtquelle trifft über dieselbe Optik 21 wie der Anregungslichtstrahl für Raman- und/oder Fluoreszenzmessungen der ersten Laserlichtquelle auf die Probe und wird über Spiegel 82 zu einem Strahlteiler gelenkt, der das Licht von der zweiten Lichtquelle in Richtung des Spiegels 82 und der Optik 21 passieren lässt und das durch die Optik 21 zurückreflektierte Licht der Oberfläche auskoppelt, so dass das von der Probenoberfläche zurückreflektierte Licht zu einer Photodiode 86 gelenkt wird. Dort wird das zurückreflektierte Signal detektiert und einer nicht dargestellten Auswerteeinheit zugeführt. Die Auswerteeinheit ermittelt aus dem zurückreflektierten Signal die Phasenlage des Maximums des Photodiodensignals relativ zum Anregungssignal der elektrisch fokussierbare Linse 84. Diese Phasenlage ist ein Maß für die Höhenänderung der Oberfläche der Probe. In Abhängigkeit von der Phasenlage wird dann der Probentisch verfahren, derart, dass die Probe sich ständig in der Fokalebene für die Raman- und/oder Fluoreszenzmikroskopie befindet. Das Verfahren des Probetisches erfolgt gesteuert oder geregelt in Abhängigkeit von der Phasenlage.

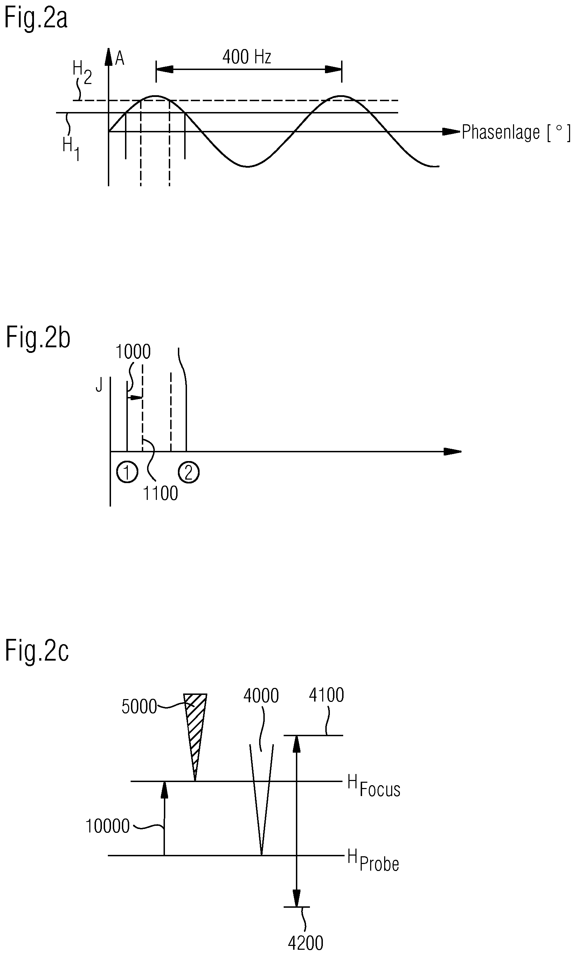

Des Weiteren in den Strahlengang eingebracht ist nach der zweiten Lichtquelle 80 eine elektrisch fokussierbare Linse 84, die dazu dient, die Fokuslage der zweiten Lichtquelle 80 zu ändern. Bei der elektrisch fokussierbaren Linse kann es sich beispielsweise um die elektrisch verstimmbare, d.h. fokussierbare Linse EL-16-40-TC der Optotune Switzerland AG, Bernstraße 388, CH-8953 Dietikon handeln, die eine Verstimmung im Bereich -2 bis +3 Dioptrien bei 30° C zulässt. Die Apertur der elektrisch fokussierbare Linse EL-16-40-TC beträgt 16 mm, die Transmission im Wellenlängenbereich 450 nm bis 950 nm und liegt bei über 90 %. Die beschriebene elektrische Linse ist beispielhaft und nicht einschränkend. Ber Die elektrisch fokussierbare Linse wird bevorzugt periodisch angeregt, insbesondere mit einer Frequenz im Bereich 200 bis 500 Hz. Auch andere Frequenzen sind möglich. Durch die periodische Anregung der elektrisch fokusierbaren Linse wird die Fokuslage der zweiten Lichtquelle periodisch verändert. Immer wenn die Fokusebene in/auf der Probe zu liegen kommt, wird ein Signal an der Photodiode 86 detektiert. Aus diesem Signal kann die Phasenlage des Photodiodensignals relativ zum Anregungssignal der elektrisch fokusierbaren Linse ermittelt und somit auf die Probentopographie rückgeschlossen werden. In Abhängigkeit von der Phasenlage wird dann der Probentisch so verfahren, dass die Oberflächentopographie der Probe ausgeglichen wird und sich die Probe stets in der konfokalen Ebene für die Raman- und/oder Fluoreszenzmikroskopie befindet. Dies ist detailliert in Fig. 2a-2b beschrieben.

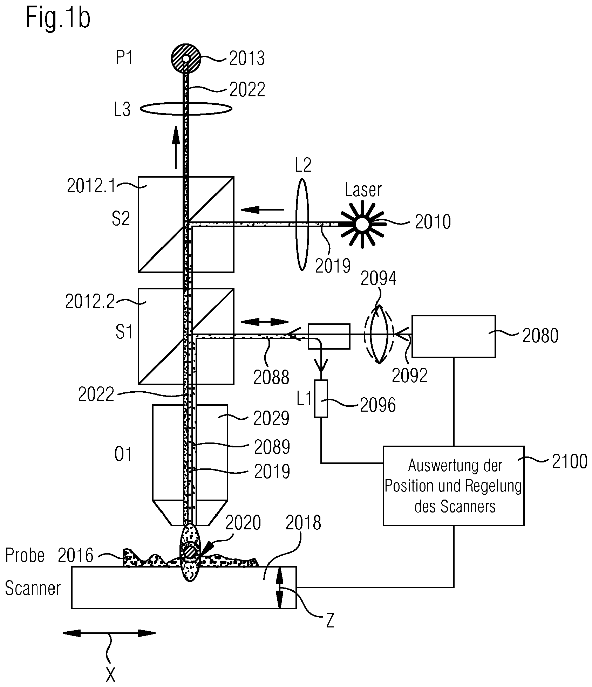

In Figur 1b ist der prinzipielle Aufbau eines konfokalen Raman-Mikroskopes gezeigt, wobei das Licht der ersten Lichtquelle 2010 bzw. des Lasers für die Raman-Messung parallel zum Licht der zweiten Lichtquelle 2080 für die Topographiemessung geführt wird. Gleiche Bauteile wie in der vorangegangenen Figur 1a werden mit um 2000 erhöhten Bezugsziffern gekennzeichnet. Bei dem in Figur 1b gezeigten Raman-Mikroskop 2001 wird sowohl das Licht der ersten Lichtquelle 2010, zur Anregung des Raman-Effektes, wie das Licht der zweiten Lichtquelle 2080, durch die gleiche Optik 2029 auf im Wesentlichen denselben lateralen Bereich 2020 der Probe 2016 fokussiert. Die Fokuslage für die Raman-Messung, d.h. der konfokale Fokus des Anregungslaserlichtes der ersten Lichtquelle 2010 wird für die Anregung des Raman-Effektes gewählt. Das Einkoppeln des Lichtes der ersten Lichtquelle 2010 erfolgt mittels eines Strahlteilers 2012.1 in Richtung der Probe 2016. Der Lichtstrahl 2019 wird im Strahlteiler 2012.1 umgelenkt in Richtung der Probe 2016 und durchtritt den weiteren Strahlteiler 2012.2. Das von der Probe durch Wechselwirkung erzeugte Raman-Licht durchtritt sowohl den Strahlteiler 2012.1 als auch den Strahlteiler 2012.2 und ist hinter Strahlteiler 2012.2 mit 2022 bezeichnet. Hinter Strahlteiler 2012.2 wird der Lichtstrahl 2022 auf ein Pinhole 2013 vor einem Detektor (nicht dargestellt) fokussiert. Der Lichtweg der zweiten Lichtquelle ist mit 2092 bezeichnet. Im Lichtweg von der zweiten Lichtquelle 2080 zur Probe 2016 ist eine elektrisch fokussierbare Linse 2094 angeordnet.

Zusätzlich zum Licht der Lichtquelle 2010, die der Anregung des Raman-Effektes in der Probe dient, wird über den weiteren Strahlteiler 2012.2 das Licht 2092 der zweiten Lichtquelle 2080 durch dieselbe Optik 2029 wie das Licht zur Anregung des Raman-Effektes auf die Probe 2016 gelenkt. Der Lichtstrahl ist mit 2019 bezeichnet. Das auf die Probe eingestrahlte Licht der zweiten Lichtquelle 2080 wird von der Probe reflektiert. Das reflektierte Licht 2089 wird wiederum über den weiteren Strahlteiler 2012.2 auf einen Strahlteiler geleitet und von dort auf eine Diode 2096 gelenkt. Das von der Diode 2096 aufgenommene Signal wird zu einer Auswerteeinheit 2100 geführt. Die Auswerteeinheit 2100 ist gleichzeitig die Regelung des Scanners, der entsprechend dem Signal der Photodiode, in z-Richtung verschoben wird.

Bei der Diode 2096 die das Lichtsignal aufnimmt handelt es sich beispielsweise um eine InGaAs-Diode.

Damit sowohl das Licht zur Anregung des Raman-Effektes wie auch das der zweiten Lichtquelle dieselbe Optik durchlaufen können, ist es vorteilhaft, wenn entweder unterschiedliche Spektralbereiche oder eine Zeitmultiplex-Vorrichtung eingesetzt wird. Beispielsweise kann das Licht der zweiten Lichtquelle im Wellenlängenbereich von 1000 nm bis 2000 nm liegen und die Lichtwellenlänge zur Anregung des Raman-Effektes bei 532 nm, d.h. im Bereich von 350 nm bis 1000 nm. Eine solche Konstellation würde dann die Aufnahme von Raman-Spektren in der Regel oberhalb von 532 nm ermöglichen. Selbstverständlich wäre auch die Auswahl anderer Wellenlängen denkbar.

Der in Fig. 1b gezeigte Aufbau ermöglicht es, mit Hilfe der zweiten Lichtquelle 2080 und der fokussierbaren, insbesondere der elektrisch fokussierbaren Linse 2094, die Probenoberfläche geregelt in die konfokale Ebene für die Raman-Messung zu verbringen. Das Regeln und/oder Steuern des Scanners kann sowohl über einen Regler und/ oder über eine Steuerung erfolgen.

Neben der Regelung/Steuerung für die Raman-Messungen ist auch eine reine Topographiemessung alleine möglich. Die berührungslose Topographiemessung eignet sich besonders gut für Proben, die empfindlich sind oder deren Topographie schon zu hoch für das AFM (>5µm) ist oder deren laterale Strukturen viel größer sind als die typischen Scanbereiche von Piezo Scannern, bspw. von100µm ist.

Fig. 2a zeigt die sinusförmige Modulation des Fokus der Linse der zweiten Lichtquelle. Die gewählte Frequenz der Modulation beträgt in vorliegendem Ausführungsbeispiel 400 Hz. Durch die sinusförmige Modulation des Fokus der Linse wird auch die Fokuslage der zweiten Lichtquelle wie in Fig. 2a gezeigt, sinusförmig durchfahren. In Fig. 2a sind in den sinusförmig modulierten Verlauf zwei Höhen der zu untersuchenden Oberfläche eingezeichnet. Die erste Höhe ist mit H₁ bezeichnet, die zweite Höhe mit H₂. Wenn der sinusförmig verlaufende Fokus der zweiten Lichtquelle auf der Oberfläche der Probe mit der Höhe H₁ zu liegen kommt, ist die konfokale Bedingung erfüllt und an der Diode wird das in Fig. 2b dargestellt Signal 1000 detektiert. Die Phasenlage des Signals 1000 ist ungefähr 15°. Nimmt die Höhe der Probe zu, beispielsweise durch thermische Ausdehnung, so verschiebt sich die Höhe von H₁ nach H₂. Jetzt wird anstelle des Signals 1000, das Signal 1100 detektiert. Wie Figur 2b zu entnehmen ist, ist das Signal 1100 gegenüber dem Signal 1000 nach rechts verschoben, die Phasenlage des Signals 1100 liegt bei 30°, der Unterschied in der Phasenlage vom ersten und zweiten Signal beträgt 15°. Das Signal 1100 wird wiederum dann detektiert, wenn der Fokus der zweiten Lichtquelle auf der Oberfläche mit der Höhe H₂ zu liegen kommt. Die Verschiebung der Phasenlage des an der Diode detektierten Signals der zweiten Lichtquelle ist somit ein Maß dafür, wie sich die Höhe der Probe ändert und kann als Stell- oder als Regelgröße für eine Steuerung oder Regelung der Probe genutzt werden, um eine Höhendifferenz der Probe auszugleichen und die Probe in die fokale Ebene der ersten Lichtquelle für die Raman und/oder Fluoreszenzmikroskopie zu verbringen. Wie Figur 2b zeigt, wandern die Signale an der Photodiode bei einer Höhenänderung H₁ nach H₂ von 1000 zu 1100 nach rechts (Signalgruppe 1) wie auch nach links (Signalgruppe 2). Zur Regelung wird aber nur die Verschiebung in eine Richtung verwandt, vorliegend die Verschiebung nach rechts gemäß Signalgruppe 1.

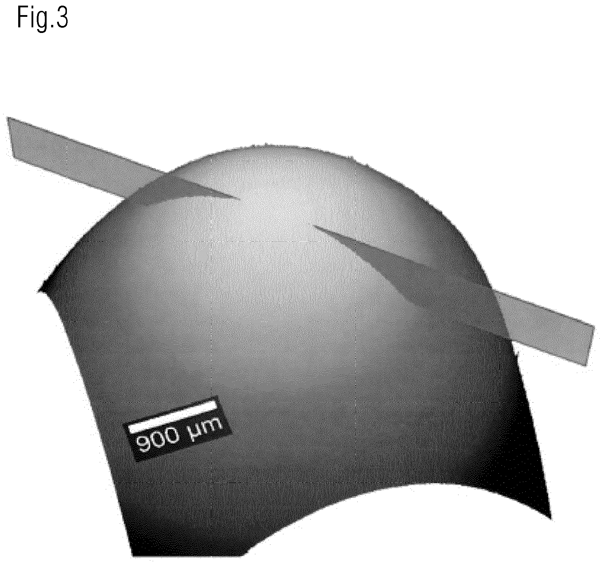

Fig.2c zeigt eine Probe mit einer Höhe H_{Probe}, wobei die Höhe H_{Probe} unterhalb der Höhe des Fokus H_{Fokus} für die Raman-Mikroskopie liegt. Der Fokus der zweiten Lichtquelle ist mit 4000 bezeichnet, er wird im Fangbereich zwischen den Grenzen 4100 und 4200 moduliert beispielsweise sinusförmig. Dadurch kann aus der Fokuslage der zweiten Lichtquelle die Höhe der Probe H_{Probe} ermittelt werden. Hat die Höhe wie im gezeigten Beispiel beispielsweise aufgrund einer Vertiefung von H_{Fokus} nach H_{Probe} abgenommen, so würde der Fokus 5000 der Ramanmessung außerhalb der Probe liegen. Durch die sinusförmige Modulation zwischen den Grenzen 4100 und 4200 der Fokuslage der zweiten Lichtquelle wird die Höhe H_{Probe} detektiert und aufgrund der Phasenlage mittels einer Steuerung oder Regelung die Probe wieder in den Fokus 5000 der Raman Messung verbracht. Das Verschieben der Probe von H_{Probe} nach H_{Fokus} ist mit 10000 bezeichnet. Fig. 3 zeigt eine Topographie einer Probe. Die Probe hat eine Ausdehnung in x-Richtung von 5000 µm. In der z-Richtung ist die Probe gewölbt mit einer Tiefe von ± 30 µm.

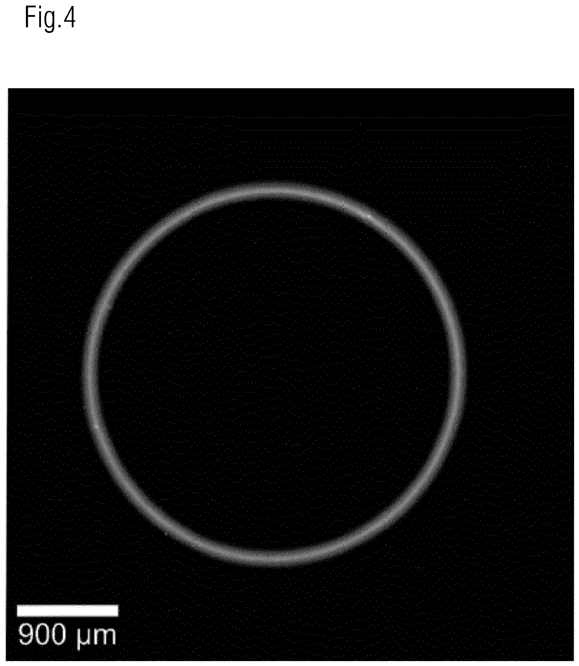

Fig. 4 zeigt die Abbildung einer Probe, die einen Höhenverlauf wie in Figur 3 gezeigt, hat, mit konfokaler Raman-Mikroskopie, wobei die Probe nicht verfahren wurde und keine Regelung der Probe in die konfokale Ebene stattgefunden hat. Deutlich zu erkennen ist, dass nur ein schmaler Randbereich der Probe im Fokus der Ramanmessungen ist, so dass nur dieser Bereich scharf abgebildet wird. Der scharfe Bereich, der abgebildet wird, ist der helle Bereich, der unscharfe Bereich ist dunkel.

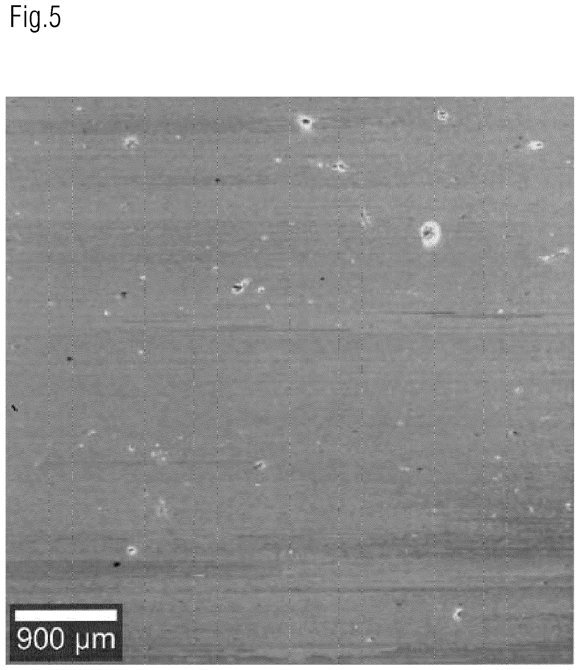

Fig. 5 zeigt die Ramanmessung an einer Oberfläche gemäß Figur 3, bei der im Gegensatz zu Figur 4 mittels des Fokus der zweiten Lichtquelle die Probe geregelt in die konfokale Ebene gebracht, wurde. Im Ergebnis ergibt sich ein vollständig scharfes, helles Bild.

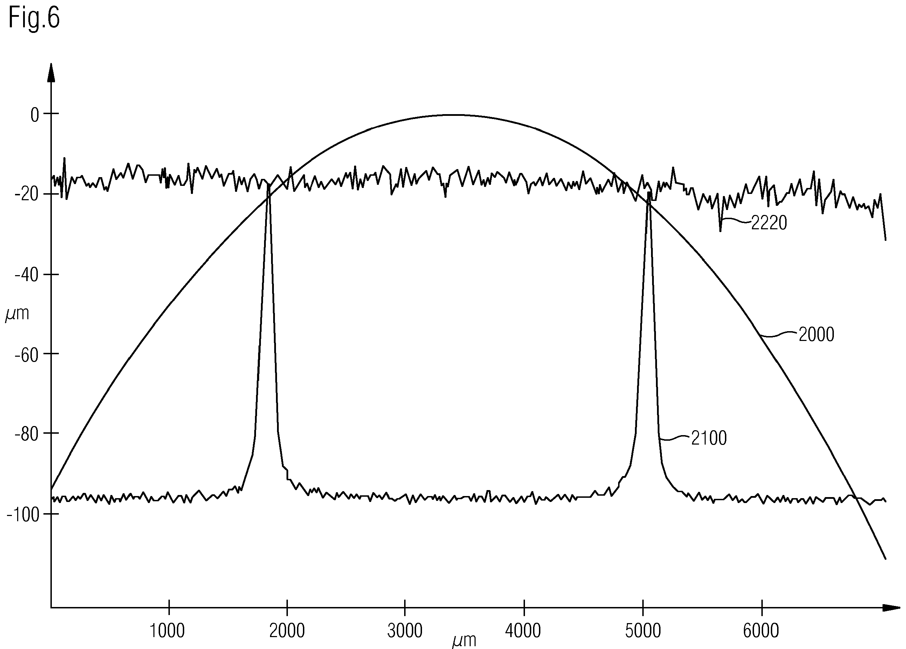

Fig. 6 zeigt den Effekt der erfindungsgemäßen Regelung. In Figur 6 ist mit 2000 der Verlauf der Oberfläche der Probe gezeigt. Die Oberfläche der Probe hat eine Tiefe bzw. z-Abweichung von 100 µm über eine x-Ausdehnung von 7000 µm. Die Kurve 2100 stellt die Raman-Intensität ohne Regelung dar. Wie den Kurven 2100 entnommen werden kann, treten Raman-Signale nur dann auf, wenn die Probe sich in der konfokalen Ebene für die Ramanmessungen befindet. Dies ist exakt für zwei Werte der Oberfläche der Fall. Die höheren oder tieferen Bereiche der Oberfläche sind außerhalb der Fokusebene und zeigen kein Signal. Mit Hilfe der zweiten Lichtquelle ist es aber möglich, durch die erfindungsgemäße Regelung mit Hilfe der Auswertung der Fokuslage der zweiten Lichtquelle die Oberfläche stets in die konfokale Ebene der Raman- und/oder Fluoreszenz-Messung zu halten, so dass über die gesamte Probe hinweg ein Raman-Signal 2200 detektiert wird.

Das Ramansignal 2200 mit Regelung ist, wie die Figur zeigt, in der Intensität gleich stark wie die beiden Spitzen 2100, die detektiert werden, wenn die Probe ohne Regelung in den Fokus verfahren wird. Dies bedeutet, dass über die gesamte Probe hinweg trotz des Oberflächenverlaufes 2000 bei Regelung ein Signal erhalten wird, das dem Signal der Probe im Fokus entspricht.

In der Erfindung wird erstmals eine Vorrichtung zur Verfügung gestellt, die es erlaubt, mittels konfokaler Mikroskopie schnell und auf einfache Art und Weise Informationen über die Oberfläche einer Probe zu erhalten. Insbesondere wird dies mit Hilfe eines zweiten Anregungs- und Detektionspfads erreicht, der es ermöglicht, die konfokale Hauptmessung auch bei schwierigsten Proben permanent im Fokus zu halten. Die Oberflächentopographie wird dazu bevorzugt mit Hilfe der Modulation einer fokussierbaren Linse ermittelt, die nur den zweiten Anregungs- und Detektionspfad beeinflusst.

## Patentansprüche

1. Verfahren zur Abbildung einer Oberfläche einer Probe (16, 2016) mit einer Topographie mit Hilfe konfokaler Raman- und/oder Fluoreszenzmikroskopie, bei dem eine erste Lichtquelle (10, 2010) zur Erzeugung von Anregungsstrahlung für Ramanstreulicht und/oder Fluoreszenz und eine zweite Lichtquelle (80, 2080) vorgesehen ist wobei
- die erste Lichtquelle (10, 2010) Licht in einem ersten Wellenlängenbereich emittiert, wobei die Grenzen des ersten Wellenlängenbereiches durch die Grenzen des emittierten Lumineszenzspektrums und/oder Ramanspektrums der zu untersuchenden Probe (16, 2016) definiert wird
- das Licht der ersten Lichtquelle (10, 2010) mittels einer Optik (21, 2029) auf die Probe (16, 2016) gelenkt wird,
- die zweite Lichtquelle (80, 2080) Licht in einem zweiten Wellenlängenbereich emittiert; wobei der zweite Wellenlängenbereich ober- oder unterhalb des ersten Wellenlängenbereichs ohne Überschneidungen mit dem ersten Wellenlängenbereich liegt
und
- das Licht der zweiten Lichtquelle (80, 2080) mit der Optik (21, 2029) und einer periodisch angeregten, elektrisch fokussierbaren Linse (84, 2094) auf die Oberfläche der Probe (16, 2016) gebracht wird, ergebend einen periodischen Fokus derart dass
- mit Hilfe einer Steuer-/Regeleinrichtung (2100) aus dem Signal der Fokusebene der zweiten Lichtquelle (80, 2080) und dem detektierten Licht der zweiten Lichtquelle (80, 2080) die Topographie der Probe (16, 2016) ermittelt und der Fokus der ersten Lichtquelle (10, 2010) mittels der Optik (21, 2029) aufgrund dieses Signales nachgeführt und auf die Probe (16, 2016) verbracht wird sowie der Modulationsbereich des periodischen Fokus der zweiten Lichtquelle (80, 2080) mittels der Optik (21, 2029) aufgrund des Signals nachgeführt wird

2. Verfahren nach Anspruch 1, wobei das Verbringen in die Fokusebene der ersten Lichtquelle (10, 2010) durch Änderung des Abstandes zwischen der Optik (21, 2029) in Form eines Objektivs und der Probe (16, 2016) erfolgt.

3. Verfahren nach wenigstens einem der Ansprüche 1 bis 2, wobei die Topographie der Probe (16, 2016) aus dem zeitlichen Verlauf der Maxima der Intensität des reflektierten und/oder an der Oberfläche der Probe (16, 2016) gestreuten Lichts der zweiten Lichtquelle (80, 2080) ermittelt wird.

4. Verfahren nach wenigstens einem der Ansprüche 1 bis 3, wobei die Änderung des Abstandes zwischen der Optik (21, 2029) in Form eines Objektivs und der Probe (16, 2016) durch Verfahren der Probe (16, 2016) in Richtung der optischen Achse des Mikroskops erfolgt.

5. Verfahren nach einem der Ansprüche 1 bis 4, wobei die erste Lichtquelle (10, 2010) zur Erzeugung von Anregungsstrahlung für Ramanstreulicht und/oder Fluoreszenzlicht zeitgleich zur zweiten Lichtquelle (80, 2080) Strahlung, insbesondere Licht emittiert.

6. Verfahren nach einem der Ansprüche 1 bis 5, wobei eine Messung des Ramanstreulichtes und/oder der Fluoreszenz angeregt durch die erste Lichtquelle (10, 2010) und die Messung der Topographie der Probe (16, 2016) mit Hilfe der zweiten Lichtquelle (80, 2080) im Wesentlichen zeitgleich erfolgt

7. Verfahren nach einem der Ansprüche 1 bis 6, wobei die erste Lichtquelle (10, 2010) einen ersten Fokus mit einer ersten Fokusgröße und die zweite Lichtquelle (80, 2080) einen zweiten Fokus mit einer zweiten Fokusgröße umfasst und die erste und zweite Fokusgröße im Wesentlichen gleich ist.

8. Vorrichtung (1) zur Abbildung der Oberflächen einer Probe (16, 2016) mit einer Topographie mit Hilfe konfokaler Raman- und/oder Fluoreszenzmikroskopie, umfassend eine erste Lichtquelle (10, 2010) für Ramanstreulicht und/oder Fluoreszenz und eine zweite Lichtquelle (80, 2080), wobei
- die erste Lichtquelle (10, 2010) Licht in einem ersten Wellenlängenbereich emittiert, wobei die Grenzen des ersten Wellenlängenbereiches durch die Grenzen des emittierten Lumineszenzspektrums und/oder Ramanspektrums der zu untersuchenden Probe (16, 2016) definiert wird
- die zweite Lichtquelle (80, 2080) Licht in einem zweiten Wellenlängenbereich emittiert, wobei der zweite Wellenlängenbereich oberhalb oder unterhalb des ersten Wellenlängenbereichs ohne Überschneidungen mit dem ersten Wellenlängenbereich liegt
- das Licht der ersten Lichtquelle und der zweiten Lichtquelle durch dieselbe Optik (21, 2029) geführt wird und
- die Vorrichtung eine elektrisch fokussierbare Linse (84, 2094), die periodisch angeregt wird, umfasst, um die Fokusebene der zweiten Lichtquelle (80, 2080) in/auf die Oberfläche der Probe (16, 2016) zu bringen ergebend einen periodischen Fokus, sowie eine Steuer-/Regeleinrichtung (2100), die aus einem Signal der Fokusebene der zweiten Lichtquelle (80, 2080) die Topographie der Probe (16, 2016) ermittelt und die Probe (16,2016) aufgrund dieses Signals und dem detektierten Licht der zweiten Lichtquelle (80, 2080) in eine Fokusebene der ersten Lichtquelle (10, 2010) verbringt

9. Vorrichtung nach Anspruch 8, wobei die Vorrichtung eine der nachfolgenden Vorrichtungen ist:
- ein konfokales Raman-Mikroskop;
- ein konfokales Fluoreszenz-Mikroskop;
- ein konfokales Raman/Fluoreszenz-Mikroskop.

10. Vorrichtung nach Anspruch 9, wobei die Vorrichtung ein konfokales Raman-Mikroskop und/oder Fluoreszenz-Mikroskop ist und mit Hilfe der ersten Lichtquelle (10, 2010) eine Lichtemission in der Probe (16, 2016) angeregt wird und die Vorrichtung einen Detektor (40) zur Detektion der von der Probe emittierten Photonen der emittierten Raman- und/oder Fluoreszenz-Photonen umfasst.

11. Vorrichtung nach wenigstens einem der Ansprüche 8 bis 9, wobei das konfokale Raman- und/oder Fluoreszenzmikroskop ein optisches Element, insbesondere Objektiv (2029) umfasst, mit dem das Licht der ersten und/oder zweiten Lichtquelle auf die Probe fokussiert wird.

12. Vorrichtung nach einem der Ansprüche 8 bis 11,
wobei der erste Wellenlängenbereich Wellenlängen von 350 nm bis 1000 nm, insbesondere 500 nm bis 1000 nm umfasst und der zweite Wellenlängenbereich Wellenlängen von 1000 nm bis 2000 nm, insbesondere 1000 nm bis 1500 nm
und/oder
die Vorrichtung einen Hubtisch und/oder einen Tisch mit Piezoelementen umfasst

13. Verwendung eines Verfahrens gemäß einem der Ansprüche 1 bis 7 zur
- hochaufgelösten Messung von Raman- und/oder Fluoreszenzsignalen an porösen und/oder rauen Proben.
- zur Messung von Raman- und/oder Fluoreszenzsignalen an Proben mit thermischer und/oder mechanischer Drift.
- zur Messung von Raman- und/oder Fluoreszenzsignalen an trocknenden Proben oder Flüssigkeiten, die verdampfen.
- zur zeitgleichen Messung von Raman- und/oder Fluoreszenzsignalen und der Oberflächentopographie an einer Probe.

## Claims

1. Method for imaging a surface of a sample (16, 2016) with a topography by means of confocal Raman and/or fluorescence microscopy, in which a first light source (10, 2010) is provided for generating excitation radiation for Raman scattered light and/or fluorescence and a second light source (80, 2080) is provided, wherein
- the first light source (10, 2010) emits light in a first wavelength range, wherein the limits of the first wavelength range are defined by the limits of the emitted luminescence spectrum and/or Raman spectrum of the sample (16, 2016) to be examined,
- the light from the first light source (10, 2010) is directed onto the sample (16, 2016) by means of optics (21, 2029),
- the second light source (80, 2080) emits light in a second wavelength range; wherein the second wavelength range lies above or below the first wavelength range without overlaps with the first wavelength range, and
- the light of the second light source (80, 2080) with the optics (21, 2029) and a periodically excited, electrically focusable lens (84, 2094) is brought onto the surface of the sample (16, 2016), resulting in a periodic focus, such that
- the topography of the sample (16, 2016) is determined from the signal of the focal plane of the second light source (80, 2080) and the detected light of the second light source (80, 2080) with the aid of a control/regulating device (2100), and the focus of the first light source (10, 2010) is tracked by means of the optics (21, 2029) on the basis of this signal and is applied to the sample (16, 2016), and the modulation range of the periodic focus of the second light source (80, 2080) is tracked by means of the optics (21, 2029) on the basis of the signal.

2. Method according to claim 1, wherein the introduction into the focal plane of the first light source (10, 2010) is effected by changing the distance between the optics (21, 2029) in form of an objective and the sample (16, 2016).

3. Method according to at least one of claims 1 to 2, wherein the topography of the sample (16, 2016) is determined from the temporal course of the maxima of the intensity of the reflected and/or scattered light of the second light source (80, 2080) on the surface of the sample (16, 2016).

4. Method according to at least one of claims 1 to 3, wherein the change in the distance between optics (21, 2029) in form of an objective and the sample (16, 2016) is effected by moving the sample (16, 2016) in the direction of the optical axis of the microscope.

5. Method according to at least one of claims 1 to 4, wherein the first light source (10, 2010) for generating excitation radiation for Raman scattered light and/or fluorescent light emits radiation, in particular light, simultaneously with the second light source (80, 2080).

6. Method according to at least one of claims 1 to 5, wherein a measurement of the Raman scattered light and/or the fluorescence excited by the first light source (10, 2010) and the measurement of the topography of the sample (16, 2016) with the aid of the second light source (80, 2080) takes place substantially simultaneously.

7. Method according to at least one of claims 1 to 6, wherein the first light source (10, 2010) comprises a first focus having a first focus size and the second light source (80, 2080) comprises a second focus having a second focus size, and the first and second focus sizes are substantially equal.

8. Device for imaging the surfaces of a sample (16, 2016) with a topography by means of confocal Raman and/or fluorescence microscopy, comprising a first light source (10, 2010) for Raman scattered light and/or fluorescence, and a second light source (80, 2080), wherein
- the first light source (10, 2010) emits light in a first wavelength range, wherein the limits of the first wavelength range are defined by the limits of the emitted luminescence spectrum and/or Raman spectrum of the sample (16, 2016) to be examined,
- the second light source (80, 2080) emits light in a second wavelength range; wherein the second wavelength range lies above or below the first wavelength range without overlaps with the first wavelength range;
- the light from the first light source and the second light source is guided through the same optics (21, 2029), and
- the device comprises an electrically focusable lens (84, 2094) which is periodically excited for bringing the focal plane of the second light source (80, 2080) into/onto the surface of the sample (16, 2016), resulting in a periodic focus, and
- a control/regulating device (2100) which determines the topography of the sample from a signal of the focal plane of the second light source (80, 2080) and moves the sample (16, 2016) into a focal plane of the first light source (10, 2010) on the basis of this signal and the detected light of the second light source (80, 2080).

9. Device according to claim 8, wherein the device is one of the following devices:
- a confocal Raman microscope;
- a confocal fluorescence microscope;
- a confocal Raman/fluorescence microscope.

10. Device according to claim 9, wherein the device is a confocal Raman microscope and/or fluorescence microscope and a light emission is excited in the sample (16, 2016) with the aid of the first light source (10, 2010) and the device comprises a detector (40) for detecting the photons emitted by the sample of the Raman and/or fluorescence photons.

11. Device according to one of claims 8 to 9, wherein the confocal Raman and/or fluorescence microscope comprises an optical element, in particular an objective (2029), with which the light of the first and/or second light source is focused onto the sample.

12. Device according to one of claims 8 to 11, wherein the first wavelength range comprises wavelengths of 350 nm to 1000 nm, in particular 500 nm to 1000 nm, and the second wavelength range comprises wavelengths of 1000 nm to 2000 nm, in particular 1000 nm to 1500 nm, and/or the device comprises a lifting table and/or a table with piezo elements.

13. Use of a method according to one of claims 1 to 7 for
- high-resolution measurement of Raman and/or fluorescence signals on porous and/or rough samples;
- measurement of Raman and/or fluorescence signals on samples with thermal and/or mechanical drift;
- measurement of Raman and/or fluorescence signals on drying samples or liquids which evaporate;
- simultaneous measurement of Raman and/or fluorescence signals and surface topography on a sample.

## Revendications

1. Procédé pour représenter une surface d'un échantillon (16, 2016) par microscopie confocale Raman et/ou à fluorescence, dans lequel une première source lumineuse (10, 2010) est prévue pour produire un rayonnement d'excitation de lumière diffusée par effet Raman et/ou de fluorescence et une deuxième source lumineuse (80, 2080) est prévue, dans lequel
- la première source lumineuse (10, 2010) émet de la lumière dans une première plage de longueurs d'ondes, les limites de la première plage de longueurs d'ondes étant définies par celles du spectre de luminescence émis et/ou du spectre Raman de l'échantillon (16, 2016) à examiner,
- la lumière de la première source lumineuse (10, 2010) est guidée vers l'échantillon (16, 2016) au moyen d'une optique (21, 2029),
- la deuxième source lumineuse (80, 2080) émet de la lumière dans une deuxième plage de longueurs d'ondes, laquelle deuxième plage de longueurs d'ondes se trouve au-dessus ou en dessous de la première plage de longueurs d'ondes sans recouper la première plage de longueurs d'ondes,
et
- la lumière de la deuxième source lumineuse (80, 2080) est amenée sur l'échantillon (16, 2016) par l'optique (21, 2029) et une lentille (84, 2094) à focalisation électrique excitée périodiquement, ce qui donne une focalisation périodique, de telle manière que
- la topographie de l'échantillon (16, 2016) soit déterminée à l'aide d'une installation de commande et de régulation (2100) à partir du signal du plan focal de la deuxième source lumineuse (80, 2080) et de la lumière détectée de la deuxième source lumineuse (80, 2080) et la focale de la première source lumineuse (10, 2010) est suivie au moyen de l'optique (21, 2029) sur la base de ce signal et amenée sur l'échantillon (16, 2016) et la plage de modulation de la focale périodique de la deuxième source lumineuse (80, 2080) est suivie au moyen de l'optique (21, 2029) sur la base du signal.

2. Procédé selon la revendication 1, dans lequel la première source lumineuse (10, 2010) est amenée dans le plan focal par la modification de la distance entre l'optique (21, 2029) sous la forme d'un objectif et l'échantillon (16, 2016).

3. Procédé selon l'une au moins des revendications 1 à 2, dans lequel la topographie de l'échantillon (16, 2016) est déterminée à partir de l'évolution dans le temps des maxima d'intensité de la lumière de la deuxième source lumineuse (80, 2080) réfléchie et/ou dispersée à la surface de l'échantillon (16, 2016).

4. Procédé selon l'une au moins des revendications 1 à 3, dans lequel la modification de la distance entre l'optique (21, 2029) sous la forme d'un objectif et l'échantillon (16, 2016) s'effectue par déplacement de l'échantillon (16, 2016) dans la direction de l'axe optique du microscope.

5. Procédé selon l'une des revendications 1 à 4, dans lequel la première source lumineuse (10, 2010) émet un rayonnement, en particulier de la lumière, en même temps que la deuxième source lumineuse (80, 2080) afin de produire un rayonnement d'excitation de la lumière dispersée par effet Raman et/ou de la lumière fluorescente.

6. Procédé selon l'une des revendications 1 à 5, dans lequel une mesure de la lumière dispersée par effet Raman et/ou de la fluorescence excitées par la première source lumineuse (10, 2010) et la mesure de la topographie de l'échantillon (16, 2016) à l'aide de la deuxième source lumineuse (80, 2080) s'effectuent de façon sensiblement simultanée.

7. Procédé selon l'une des revendications 1 à 6, dans lequel la première source lumineuse (10, 2010) comporte une première focale avec une première taille de focale et la deuxième source lumineuse (80, 2080) une deuxième focale avec une deuxième taille de focale et la première taille de focale et la deuxième sont sensiblement égales.

8. Dispositif (1) pour la représentation d'une surface d'un échantillon (16, 2016) par microscopie confocale Raman et/ou à fluorescence, comprenant une première source lumineuse (10, 2010) pour la lumière dispersée par effet Raman et/ou la fluorescence et une deuxième source lumineuse (80, 2080), dans lequel
- la première source lumineuse (10, 2010) émet de la lumière dans une première plage de longueurs d'ondes, les limites de la première plage de longueurs d'ondes étant définies par celles du spectre de luminescence émis et/ou du spectre Raman de l'échantillon (16, 2016) à examiner,
- la deuxième source lumineuse (80, 2080) émet de la lumière dans une deuxième plage de longueurs d'ondes, laquelle deuxième plage de longueurs d'ondes se trouve au-dessus ou en dessous de la première plage de longueurs d'ondes sans recouper la première plage de longueurs d'ondes,
- la lumière de la première source lumineuse et de la deuxième source lumineuse est guidée à travers la même optique (21, 2029) et
- le dispositif comprend une lentille (84, 2094) à focalisation électrique qui est excitée périodiquement, pour amener le plan focal de la deuxième source lumineuse dans/sur la surface de l'échantillon (16, 2016), ce qui donne une focalisation périodique, et
- une installation de commande/de régulation (2100) qui détermine la topographie de l'échantillon (16, 2016) à partir du signal du plan focal de la deuxième source lumineuse (80, 2080) et amène l'échantillon (16, 2016) dans un plan focal de la première source lumineuse (10, 2010) sur la base de ce signal et de la lumière détectée de la deuxième source lumineuse (80, 2080)

9. Dispositif selon la revendication 8, lequel dispositif est l'un des dispositifs suivants :
- un microscope confocal Raman ;
- un microscope confocal à fluorescence ;
- un microscope confocal Raman/à fluorescence.

10. Dispositif selon la revendication 9, lequel dispositif est un microscope confocal Raman et/ou à fluorescence et une émission de lumière est excitée dans l'échantillon (16, 2016) à l'aide de la première source lumineuse (10, 2010) et le dispositif comporte un détecteur (40) pour détecter des photons de la lumière Raman et/ou fluorescente émise par l'échantillon.

11. Dispositif selon l'une au moins des revendications 8 à 9, dans lequel le microscope confocal Raman et/ou à fluorescence comprend un élément optique, en particulier un objectif (2029), avec lequel la lumière de la première source lumineuse et/ou de la deuxième est focalisée sur l'échantillon.

12. Dispositif selon l'une au moins des revendications 8 à 11, dans lequel la première plage de longueurs d'ondes comprend des longueurs d'ondes de 350 nm à 1000 nm, en particulier de 500 nm à 1000 nm, et la deuxième plage de longueurs d'ondes comprend des longueurs d'ondes de 1000 nm à 2000 nm, en particulier de 1000 nm à 1500 nm
et/ou
le dispositif comprend un plateau de levage et/ou un plateau avec des éléments piézoélectriques.

13. Utilisation d'un procédé selon l'une des revendications 1 à 7 pour
- la mesure à haute résolution de signaux de lumière Raman et/ou de fluorescence sur des échantillons poreux et/ou rugueux ;
- la mesure de signaux de lumière Raman et/ou de fluorescence sur des échantillons présentant une dérive thermique et/ou mécanique ;
- la mesure de signaux de lumière Raman et/ou de fluorescence sur des échantillons secs ou des liquides qui s'évaporent ;
- la mesure simultanée de signaux de lumière Raman et/ou de fluorescence et de la topographie de surface d'un échantillon.
